Europäisches Patentamt

European Patent Office

Office européen des brevets

(19)

(11) **EP 1 001 331 B1**

(12) **EUROPEAN PATENT SPECIFICATION**

(45) Date of publication and mention
of the grant of the patent:
**11.08.2004 Bulletin 2004/33**

(51) Int Cl.⁷: **G06F 1/00**

(21) Application number: **99308752.7**

(22) Date of filing: **03.11.1999**

(54) **Pre-boot security controller**

Vorurladungssicherheitssteuerungseinheit

Unité de commande de système de sécurité à pré-initialisation

(84) Designated Contracting States:
**DE FR GB IT**

(30) Priority: **11.11.1998 US 107995 P**
     **24.02.1999 US 121643 P**

(43) Date of publication of application:
**17.05.2000 Bulletin 2000/20**

(73) Proprietor: **O2 Micro International Limited
Grand Cayman (KY)**

(72) Inventors:
 • **Huang, Jung-Chih
   San Jose, California 95129 (US)**
 • **Oh, Brian
   Sunnyvale, California 94087 (US)**
 • **Huang, Yishao Max
   San Jose, California 95129 (US)**
 • **Du, Sterling
   Palo Alto, California 94306 (US)**
 • **Reynoso, Aaron
   San Jose, California 95133 (US)**

(74) Representative: **Crawford, Andrew Birkby et al
A.A. Thornton & Co.,
235 High Holborn
London WC1V 7LE (GB)**

(56) References cited:
**EP-A- 0 573 719          GB-A- 2 223 610
US-A- 4 604 708          US-A- 5 594 319**

EP 1 001 331 B1

**Description**

BACKGROUND OF THE INVENTION

Field of the Invention

The present invention relates generally to security protection for computers and other microprocessor controlled devices. More specifically, the invention relates to a method and apparatus for preventing the unauthorised use of such devices.

Description of the Prior Art

Numerous security systems and approaches have been developed for computers, computer systems and applications employing personal computers. Some of these security techniques seek to render the personal computer immobile by physically attaching it to some larger and heavier object. Other security techniques attempt to prevent unauthorised use of a personal computer and/or limit or prevent access to particular information stored on the computer.

Conventional approaches for preventing unauthorised use of personal computers and/or for limiting access to particular information stored on the computer include passwords, encryption, digital signatures, access control lists, and the like. These techniques may be employed at varying levels of access to the personal computer. For example, during the boot process the operating system may ask the user to enter a password. Or, a particular application program may ask a user for a password before allowing the user to execute the program. Likewise, access control lists may be used to limit a user's access to specified programs or to data at various levels of operation within a particular program. Specified users may have read and write privileges, while other users may be restricted to read only privileges.

However, all conventional approaches to computer security, other than rendering the personal computer immobile, become active only after the personal computer is energized and executing a computer program. However, mobility is an essential characteristic of portable, laptop or notebook personal computers, as well as other similar portable electronic devices that employ integrated circuit ("IC") digital computers. Because all such information processing appliances are inherently mobile and because they are comparatively valuable, their theft has become a significant problem. Once such a device has been stolen, even if the information stored within the device remains protected by one or more of the techniques identified above, new software may be installed in the device thereby restoring its commercial value to a new "purchaser."

If such a mobile information processing appliance were to become completely inoperable after being stolen, analogous to the inoperability of automobile radios after being removed from their original vehicle, the economic motive for stealing information processing appliances would disappear. Not only would inoperability of information processing appliances reduce the economic motive for stealing mobile information processing appliances, it would further increase the security of information stored in such appliances.

British Patent Publication No GB 2 223 610 A describes a power control security system for a computer which uses a code controller to control a power switch so that data stored in the computer is not disclosed without keying in the correct code of the code controller. A set of switches are used to set the code.

United States Patent No US 4,604,708A describes an electronic security system for externally powered devices, the system including a microcomputer which executes a power on routine stored in memory whenever the microcomputer is initially coupled to a power source.

United States Patent No US 5,594,319A discloses a smart battery pack having a theft deterrent circuit with an EEPROM permitting the user to change passwords.

BRIEF SUMMARY OF THE INVENTION

An object of the present invention is to disable an information processing appliance, such as a portable, laptop or notebook personal computer, so it becomes inoperable until unlocked by its authorized user.

Another object of the present invention is to discourage theft of information processing appliances such as a portable, laptop or notebook personal computers.

Another object of the present invention is to enhance security for information processing appliances including portable, laptop or notebook personal computers.

Another object of the present invention is to facilitate use of information processing appliances including portable, laptop or notebook personal computers. As defined in claim 10, an electronic device in accordance with the present invention includes both a digital computer and a power subsystem for energizing operation of the digital computer. Also included in the electronic device is a pre-boot security controller that receives electrical power even though the power subsystem is not energizing operation of the digital computer. Moreover, the pre-boot security controller is coupled to the power subsystem for enabling the power subsystem to energize operation of the digital computer only after the pre-boot security controller receives a pre-recorded user password.

As defined in claim 1, the pre-boot security controller is an IC which includes a nonvolatile password memory that stores at least one user password. The pre-boot security controller also includes a password input circuit for receiving a password that is to be compared with any user passwords recorded in the password memory. If the pre-boot security controller is in a security operating mode, a digital logic circuit included in the pre-boot security controller compares the password received by the password input circuit with any user passwords recorded in the password memory. If the password received by the password input circuit matches a user password recorded in the password memory, an output circuit included in the pre-boot security controller, which is coupled to the digital logic circuit, transmits an output signal to the power subsystem that enables the power subsystem to energize the digital computer's operation.

In a preferred embodiment of the pre-boot security controller, the password input circuit is a keypad interface, and the electronic device includes a security keypad that is coupled to the keypad interface. In this preferred embodiment, a user of the electronic device enters a password using the security keypad that is compared with the user passwords recorded in the password memory. If the password input circuit of the pre-boot security controller receives a password which matches a user password recorded in the password memory, the pre-boot security controller transitions from the security operating mode to a application operating mode which energizes the digital computer's operation. When in the application operating mode the pre-boot security controller preserves data about pressings of the security keypad rather than comparing such pressing with passwords recorded in the password memory. It is envisioned that a computer program executed by the digital computer may be advantageously enabled to respond to recorded keypad pressing by initiating execution of a specific application computer program that a user has previously associated with a specific key.

This preferred embodiment of the pre-boot security controller also includes a System Management Bus ("SMBus") interface that exchanges data with a SMB host included in the electronic device. A computer program executed by the digital computer included in the electronic device may exchange data with the pre-boot security controller via its SMBus interface. Data exchanged between the computer program and the pre-boot security controller may program its security features, or may permit the computer program to ascertain which key of the security keypad has been pressed when the pre-boot security controller is in its application operating mode.

These and other features, objects and advantages will be understood or apparent to those of ordinary skill in the art from the following detailed description of the preferred embodiment as illustrated in the various drawing figures.

## BRIEF DESCRIPTION OF THE DRAWINGS

FIG. 1 is a block diagram illustrating a portion of an electronic device in accordance with the present invention that includes a digital computer, a power subsystem and a pre-boot security controller in accordance with the present invention; and

FIG. 2 is a block diagram illustrating in greater detail the pre-boot security controller of the present invention that is depicted in FIG. 1.

## DETAILED DESCRIPTION

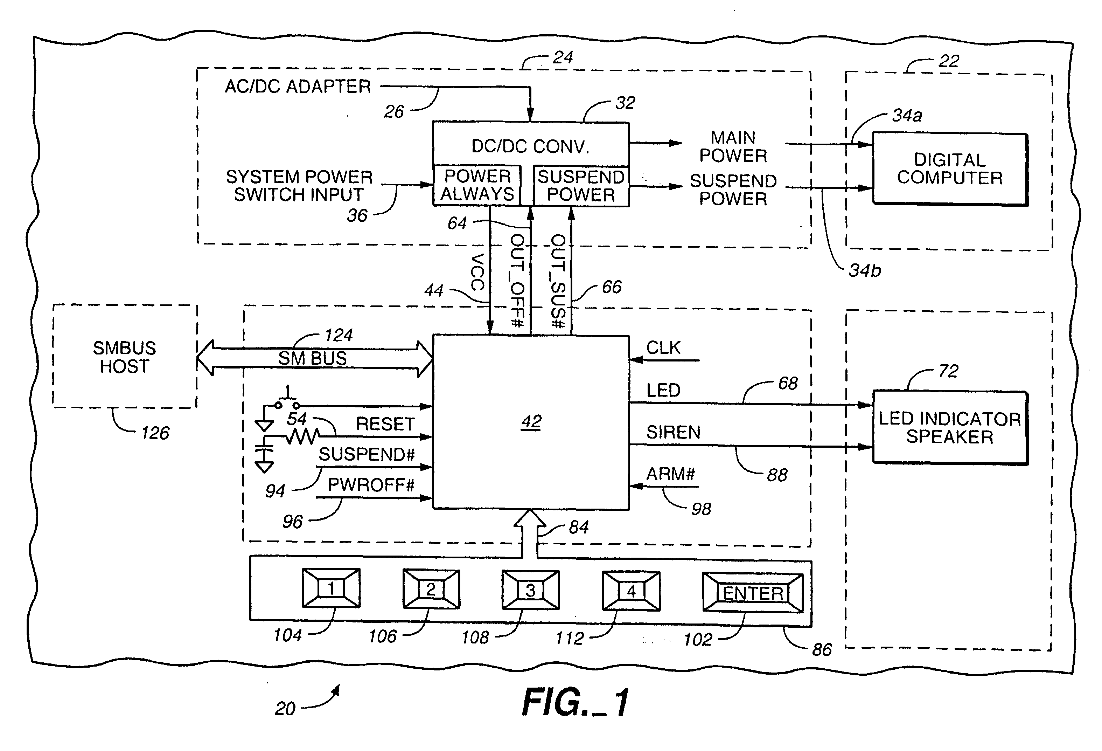

FIG. 1 depicts a portion of an electronic device such as a portable, laptop or notebook personal computer, referred to by the general reference character 20, that includes an IC digital computer 22. During normal operation of the electronic device 20, a power subsystem 24 supplies electrical power that energizes operation of the digital computer 22 together with other portions of the electronic device 20 not illustrated in FIG. 1. The power subsystem 24 receives electrical power from an electrical power source such as an AC/DC adapter or batteries via an input-power line 26 for conversion to and regulation of voltages suitable for energizing operation of the digital computer 22. In the illustration of FIG. 1, the power subsystem 24 includes a DC/DC converter 32 that supplies converted and regulated main operating mode power and suspend operating mode power to the digital computer 22, and to other portions of the electronic device 20 not illustrated in FIG. 1, respectively via output-power lines 34a and 34b. A signal present on a system-power-switch line 36 enables or disables the DC/DC converter 32 for energizing operation of the entire electronic device 20.

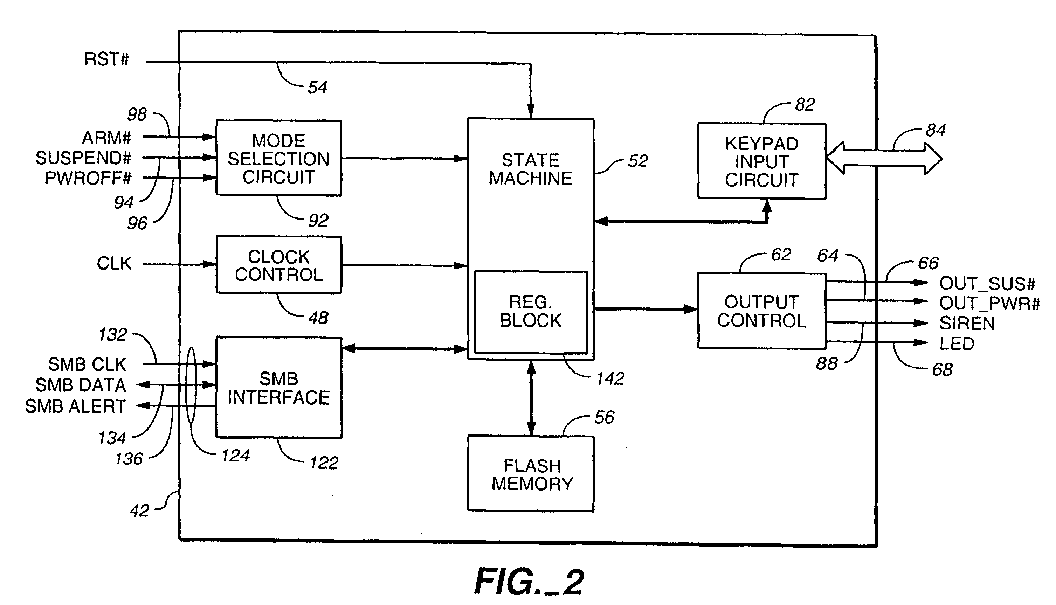

In accordance with the present invention, the electronic device 20 also includes an IC pre-boot security controller 42 that receives VCC electrical power from the DC/DC converter 32 via a VCC power line 44. The DC/DC converter 32 supplies VCC electrical power to the pre-boot security controller 42 continuously whenever the DC/DC converter 32 receives electrical power via the input-power line 26 and the signal present on the system-power-switch line 36 enables DC/DC converter 32 for energizing operation of the entire electronic device 20. Referring now to FIG. 2, the pre-boot security controller 42 includes a clock control 48 that supplies a CLK signal to a digital logic state machine 52. Operation of the state machine 52 may place the pre-boot security controller 42 into any one of three different operating modes.

When the DC/DC converter 32 first supplies VCC electrical power to the pre-boot security controller 42, a signal supplied to the pre-boot security controller 42 via a RST# signal-line 54 is negated and a password has been previously recorded into a 512 byte nonvolatile, electronically rewritable flash memory 56, the pre-boot security controller 42 enters a security operating mode. When the pre-boot security controller 42 is in the security operating mode, an output control 62, included in the pre-boot security controller 42, transmits signals to the DC/DC converter 32 via a OUT_PWR# signal-line 64 and an OUT_SUS# signal-line 66 that inhibit the DC/DC converter 32 from energizing operation of the digital computer 22, and other portions of the electronic device 20 not illustrated in FIG. 1. Thus, while the signals present on the OUT_PWR# signal-line 64 and OUT_SUS# signal-line 66 are asserted, the electronic device 20, except for the pre-boot security controller 42, the clock control 48 and a portion of the DC/DC converter 32, is inoperable. Moreover, to apprise a user of the electronic device 20 that the pre-boot security controller 42 is in the security operating mode, the output control 62 transmits a signal on a LED signal-line 68 which illuminates a LED included in a status output subsystem 72 illustrated in FIG. 1.

The pre-boot security controller 42 also includes a password input circuit 82 which is a keypad input circuit in the preferred embodiment illustrated in FIG. 2. As better illustrated in FIG. 1, a keypad bus 84 couples the password input circuit 82 to a 4-button security keypad 86. The preferred password input circuit 82 permits the security keypad 86 to operate with either one or the other of two different classes of keypads. One class of security keypad 86 employs scanning similar to that used for a conventional personal computer keyboard. This class of keypad supplies a patterned scanning output to the keys while monitoring every key's input. A match between the patterned scanning output and a key indicates that the key is being pressed. The other class of security keypad 86 provides individual switches for each of the keys. Each switch included in the keypad has its own output terminal. For switch type keypads pressing a key grounds the signal at that key's output terminal.

Using the security keypad 86, a user of the electronic device 20 may present a password to the state machine 52 for comparison with one or more passwords recorded in the flash memory 56. Upon entering the security operating mode, the state machine 52 starts an ESCAPE timer that pressing any button on the security keypad 86 resets. While the ESCAPE timer is running the output signal from the output control 62 on the LED signal-line 68 keeps the LED illuminated. If for any reason the user does not finish entering the password sequence before the ESCAPE timer expires, even though the pre-boot security controller 42 remains in the security operating mode the output control 62 transmits a signal on a siren signal-line 88 to generate a warning beep on a siren included in the status output subsystem 72. In addition to sounding a warning beep on the siren, the state machine 52 increases a count of failed password attempts by one (1). If the count of failed password attempts reaches three (3), the state machine 52 starts a siren timer and the output control 62 transmits a signal on the siren signal-line 88 which by default activates the siren for one (1) minute. While the siren is sounding throughout the interval established by the siren timer, the user may still enter a valid password. However, if the siren timer expires, the pre-boot security controller 42 stops the siren and enters a suspend operating mode. After the pre-boot security controller 42 enters the suspend operating mode, the process for entering a password may again be restarted.

When the user enters a password that is recorded in the flash memory 56, the state machine 52 exits the security operating mode and enters an application operating mode thereby operationally unlocking the electronic device 20. Transition of the state machine 52 from the security operating mode to the application operating mode causes the output control 62 to negate the signals present on the OUT_PWR# signal-line 64 and the OUT_SUS# signal-line 66 which causes the DC/DC converter 32 to energize the operation of the remainder of the electronic device 20.

A mode selection circuit 92 included in the pre-boot security controller 42 may receive input signals via a SUSPEND# signal-line 94 and via a PWROFF# signal-line 96. When the electronic device 20 is unlocked, the state machine 52 responds to assertion of signals received via the keypad bus 84 and/or the PWROFF# signal-line 96 by negating the signals present on the OUT_PWR# signal-line 64 and on the OUT_SUS# signal-line 66. Negation of these two signals turns-off electrical power to the electronic device 20 except for the pre-boot security controller 42, the clock control 48 and a portion of the DC/DC converter 32. Such an event may occur when the user turns the electronic device 20 off. However, such an event may also occur if a computer program executed by the digital computer 22 causes the electronic device 20 to enter a power conserving operating mode in which the current operating state of the electronic device 20 is stored into a nonvolatile memory such as a hard disk, and in which operation of the digital computer 22 and other portions of the electronic device 20 are suspended.

Upon suspending operation of the electronic device 20, the pre-boot security controller 42 correspondingly enters its suspend operating mode. If the pre-boot security controller 42 is in the suspend operating mode, toggling a signal supplied to the mode selection circuit 92 via an ARM# signal-line 98 transitions the pre-boot security controller 42 from the suspend operating mode to its security operating mode. If the pre-boot security controller 42 enters the security operating mode from the suspend operating mode, as mentioned previously restoring the electronic device 20 to full operation requires that the user enter a password that is recorded in the flash memory 56. However, if the state machine 52 remains in the suspend operating mode following entry of a valid password and does not enter the suspend operating mode, then the electronic device 20 may be restored to full operation without the user re-entering a password.

The flash memory 56 preferably records two different types of passwords, two (2) user passwords and a supervisor password that acts as a master key for the electronic device 20. Both the user passwords and the supervisor password are twenty (20) bits long. In combination with the 4-button security keypad 86, recording twenty (20) bit long passwords provides more than 800,000 possible password consisting of between one (1) and five (5) successive key combinations. The separate twenty (20) bit supervisor password together with two (2) twenty (20) bit user passwords accommodates most corporate or individual security needs.

The pre-boot security controller 42 preferably provides two different ways the user passwords and the supervisor password may be recorded. One way for recording these passwords employs the security keypad 86. To place the pre-boot security controller 42 into a user password entry mode the user concurrently presses an enter key 102 and a number one key 104 continuously through a five second interval. To place the pre-boot security controller 42 into a supervisor password entry mode the user concurrently presses an enter key 102 and a number two key 106 continuously through a five second interval. While in either the user or supervisor password entry modes, the signal supplied to the status output subsystem 72 via the LED signal-line 68 causes the LED to blink on and off until the user again presses the security keypad 86.

As depicted in FIG. 1, the password input circuit 82 receives input signals from four (4) numeric keys 104 through 112 and from the enter key 102. Operation of the state machine 52 and the capacity of the flash memory 56 permits recording up to five (5) successive combinations of all four numeric keys 104 through 112, i.e. five (5) successive numbers each having a value between one (1) and fifteen (15). After pressing one (1) to five (5) successive combinations of the four (4) numeric keys 104 through 112, pressing the enter key 102 records the password into the flash memory 56. after entering either password, the pre-boot security controller 42 enters the security operating mode upon restarting the electronic device 20, or upon asserting of the signal present on the ARM signal-line 98.

A SMBus interface 122 included in the pre-boot security controller 42 provides a second way by which the user and supervisor passwords may be recorded into the flash memory 56. As depicted in Fig 1, a SMBus 124 interconnects the SMBus interface 122 of the pre-boot security controller 42 with a SMBus host 126 included in the electronic device 20. Usually the electronic device 20 provides the SMBus host 126 in one of two different ways. One way in which the electronic device 20 provides the SMBus host 126 is by including a system controller IC that has the SMBus host 126, eg an Intel Corporation 82371SB IC identified as "Southbridge".

Another way in which the pre-boot security controller 42 can provide the SMBus host 126 is by including an embedded controller, a keyboard controller or a power management controller IC that has the same SMBus host 126. Additional, more detailed information about the SMBus specifications and protocol is provided by:

*System Management Bus Specification, Revision 1.1* © 1996, 1997, 1998, Benchmarq Microelectronics Ind, Duracell Inc, energizer Power Systems, Intel Corporation, Linear Technology Corporation, Maxim Integrated Products, Mitsubishi Electric Corporation, National Semiconductor Corporation, Toshiba Battery Co, Varta Batterie AG, December 11, 1998; and

*System Management Bus BIOS Interface Specification, Revision 1.0*, © 1996, Benchmarq Microelectronics Ind, Duracell Inc, Energizer Power Systems, Intel Corporation, Linear Technology Corporation, Maxim Integrated Products, Mitsubishi Electric Corporation, National Semiconductor Corporation, Toshiba Battery Co, Varta Batterie AG, February 15, 1995.

In accordance with the SMBus specification, the SMBus interface 122 uses an input SMBus clock signal-line 132, a bi-directional SMBus data-input/output signal-line 134, and an output SMBus alert signal-line 136 included in the SMBus 124 for exchanging data with the SMBus host 126. In exchanging data with the SMBus host 126, the pre-boot security controller 42 uses the SMBus Write Word and Read Word protocols.

To permit recording the user or supervisor passwords into a OEM Defined Flash Memory (ODFM) space in the flash memory 56, the pre-boot security controller 42 includes an OEM Defined Index Port ("ODIP"). A write only register in a register block 142 included in the state machine 52, the Programmable OEM Defined Index ("ODI") register, specifies an index or sub-address that has been assigned that must be used communicating with the ODIP via the SMBus 124. The data in a high-order byte of the ODI register, which is physically located in the flash memory 56, has a default value of 40h. A manufacturer of the electronic device 20 may arbitrarily select and record an index or sub-address value of 40h to OFEh into the ODI register. The value present in the ODI register effectively specifies a port address that the SMBus host 126 must use in accessing user or supervisor passwords, or other security features of the pre-boot security controller 42. Thus, either using the default value of 40h or another ODIP index or sub-address recorded by the manufacturer into the ODI register, commands from the SMBus host 126 may access secure areas in the flash memory 56 such as those storing passwords or other security information.

A WR_ODIP_OK status bit in a Password Status register, also included in the register block 142, indicates whether an address for the ODIP has been successfully stored into ODI register. In recording user passwords or the supervisor password into the flash memory 56 via the SMBus 124, a computer program must first read this WR_ODIP_OK status bit to confirm that the ODI register contains a valid ODIP index or subaddress. The WR_ODIP_OK status bit can be cleared by writing a "1' to that register location.

An ODIPOTP bit in a OTP register included in the register block 142 permits a manufacturer of the electronic device 20 to permanently protect the ODIP address recorded in the ODI register. The ODIPOTP bit in a OTP register is a sticky bit. That is, the ODIPOTP bit will always remain one (1) after first being set to that value. Moreover, setting the ODIPOTP bit to one (1) prevents subsequently either writing an ODIP address into the ODI register, or even reading the contents of the ODI register. If ODIPOTP bit is set, attempting to read the ODI register always returns a value of "OOh." The ODIPOTP bit in the OTP register may be read to determine whether the index stored into the ODI register is write and read protected.

User and supervisor passwords are recorded into the flash memory 56 using the SMBus 124 if such passwords are not already recorded in the flash memory 56 and the SMBus host 126, using the ODIP, transmits a command to the pre-boot security controller 42 to record the password at the appropriate location in the flash memory 56. If a password is already stored in the flash memory 56, then the SMBus host 126 must first transmit a command to the pre-boot security controller 42 which verifies the stored password. After the password to be replaced has been verified, the SMBus host 126 may then transmit a command to the pre-boot security controller 42 to record the password at the appropriate location in the flash memory 56.

The pre-boot security controller 42 permits user and supervisor passwords to be erased if they are no longer needed. New passwords can be entered only if the old one has been erased or verified before recording the new password. Supervisor and user passwords can be erased using the security keypad 86. If the user concurrently presses a number three key 108 and the enter key 102 for more than five (5) seconds and then enters either the user or the supervisor password, the user password will be erased. This feature allows the supervisor to change the user passwords without knowing either user password. After the user passwords have been erased, a new user password can then be entered as described above.

Concurrently pressing a number four key 112 and the enter key 102 for more than five (5) seconds places the pre-boot security controller 42 into a supervisor password erase mode. After the pre-boot security controller 42 enters the supervisor password erase mode, the supervisor password may be erased by entering that password. After the supervisor password has been erased, a new supervisor password can then be entered as described above.

Similar to using the security keypad 86 for entering passwords, when erasing passwords the LED begins blinking and the state machine 52 starts the ESCAPE timer. Depressing any button resets the ESCAPE timer. If for any reason the user does not finish the sequence before the ESCAPE timer expires, the pre-boot security controller 42 returns to its previous state. Following entry of an incorrect password in either of the password erase modes the pre-boot security controller 42 produces an error tone and the pre-boot security controller 42 terminates the password erasing operation.

Erasing user and supervisor passwords from the flash memory 56 using the SMBus 124 requires that the SMBus host 126 first transmit a command to the pre-boot security controller 42 which verifies the stored password. After the password to be erased has been verified, the SMBus host 126 may then transmit an erase command to the pre-boot security controller 42.

The register block 142 also includes a configuration register which includes a bit that a command from the SMBus host 126 may set to prevent entry of user or supervisor passwords using the security keypad 86.

In addition to the user and supervisor passwords, the pre-boot security controller 42 also provides additional locations in the flash memory 56 into which a manufacturer of the electronic device 20, using the ODIP, may record additional security data for the electronic device 20. For such purposes a manufacturer of the electronic device 20 may record a thirty-two (32) bit long system identification number ("SIN"). The SIN, in principle, permits the manufacturer, if desired, to identify a specific electronic device 20 at some future date. Information stored in the SIN may include model serial number, lot number, manufacture date/place together with other significant information required for customer service. A manufacturer can customize information stored in the SIN to their individual needs.

In addition to the SIN, a manufacturer of the electronic device 20 may also record in the flash memory 56 a twenty (20) bit long KEY which a manufacturer may subsequently use, as explained in greater detail below, in causing the pre-boot security controller 42 generate and record an encrypted version of the SIN. Lastly, a manufacturer may also record in the flash memory 56 a twenty (20) bit long personal identification number ("PIN"). The PIN is a manufacturer controlled master key for the electronic device 20 that enables the manufacturer to unlock the electronic device 20 using the security keypad 86 independently of the user or supervisor password. The PIN should be unique for every electronic device 20, and should be treated as confidential information by the manufacturer. If an end-user requires assistance in unlocking the electronic device 20 perhaps because the user and supervisor passwords have become unobtainable, after verifying the end-user's identity the manufacturer may permit the electronic device 20 to be unlocked using the PIN.

The electronic device 20 permits a manufacturer to employ one or another of two different types of PIN. Similar to a user or supervisor password, a manufacturer records the first type of PIN into the flash memory 56 using the SMBus 124. A PIN recorded into the flash memory 56 in this way is referred to as an "EASY PIN," and is recorded at the same location in the flash memory 56 as the KEY. Entering the EASY PIN through the security keypad 86 while the pre-boot security controller 42 is in the security operating mode unlocks the electronic device 20 while concurrently erasing the user and supervisor passwords. The pre-boot security controller 42 generates a second type of PIN by encrypting the SIN with the KEY. A PIN recorded into the flash memory 56 in this way is referred to as a "CIPHERED PIN" as contrasted with the EASY PIN. Similar to the EASY PIN, entry of the CIPHERED PIN through the security keypad 86 while the pre-boot security controller 42 is in the security operating mode also unlocks the electronic device 20 and concurrently erases the user and supervisor passwords.

The EASY PIN and CIPHERED PIN are mutually exclusive. If values have been recorded in the flash memory 56 for both types of PINs, generation of the CIPHERED PIN causes data recorded at the EASY PIN, i.e. KEY, location to be automatically erased. In generating the CIPHERED PIN, the pre-boot security controller 42 employs a stream encryption algorithm in which the KEY operates on the SIN on a bit-by-bit basis. The stream algorithm is set forth below.

$$\text{CIPHERED PIN}_P = \text{SIN}_s \text{ xor KEY}_k$$

Where p = 1 to 20, s = 1 to 20, k = 1 to 20. If any hexadecimal digit of CIPHERED PIN is "1111", it can be replaced with a replacement digit ("RD") previously recorded into the flash memory 56 via the SMBus 124.

The pre-boot security controller 42 provides the mutually exclusive EASY PIN and CIPHERED PIN so a manufacturer may easily configure security features of the pre-boot security controller 42 for its marketing and customer service organization. Using the SIN and EASY PIN, a manufacturer records both values into the flash memory 56 before shipping the electronic device 20. Conversely, use of the SIN and CIPHERED PIN permits delaying recording those values into the flash memory 56 until ownership of the electronic device 20 is registered. Use of the SIN and EASY PIN technique may require only minor changes in production sequence together with accurate data base management. Conversely, use of the SIN and CIPHERED PIN technique eliminates any need for manufacturing changes to enable the security features of the pre-boot security controller 42 as products change. However, use of the SIN and CIPHERED PIN technique requires a reliable product registration process and maintaining a data base of those registrations.

The SIN, KEY and EASY PIN can only be accessed for recording, verification and erasure through the SMBus interface 122. However, only the SIN can also be read via the SMBus interface 122. Similar to the ODIP, bits in the Password Status respectively indicate whether a SIN, KEY and EASY PIN are present in the flash memory 56. Also similar to the ODIP, the OTP register provides sticky bits to prevent over-writing the SIN, the KEY and/or the PIN. The protection afforded by the sticky bits in the OTP register is further augmented to prevent compromising the security provided by the pre-boot security controller 42 if a manufacturer maintains as confidential the index or sub-address value recorded in the ODI register that specifies the ODIP port index or sub-address.

The pre-boot security controller 42 permits limited access to the SIN, KEY, PIN, RD, and supervisor and user passwords through the ODIP. If one of these items has not already been recorded into the flash memory 56, then the pre-boot security controller 42 will accept a command to record a first value for that item. The pre-boot security controller 42 will verify a recorded value for any of these items by comparing a value supplied to the pre-boot security controller 42 via the SMBus interface 122 with the value recorded in the flash memory 56. Furthermore, if sticky bits have not been set in the OTP register for the ODIP, SIN, KEY and/or PIN, after successfully verifying one of these items any value recorded in the flash memory 56 for them may be erased and/or a new value recorded. Also after verification, the RD and supervisor and user passwords may always be erased and/or a new value recorded. However, in performing these operations on values recorded in the flash memory 56, as described above a manufacturer either must first record the ODIP index or sub-address in the ODI register and then use that index or sub-address in accessing the security data, or must use the default value of 40h provided by the pre-boot security controller 42 when accessing such data.

Upon entry of a proper password into the security keypad 86, the pre-boot security controller 42 enters its application operating mode. When the pre-boot security controller 42 is in the application operating mode it responds to pressing any key 102 through 112 of the security keypad 86 by storing in the register block 142 data indicating which key 102 through 112 has been pressed, and by transmitting a SMBus alert, i.e. an interrupt, to the SMBus host 126. The computer program executed by the digital computer 22, after interrogating the pre-boot security controller 42 via the SMBus 124 to determine which key 102 through 112 has been pressed, may respond appropriately to that event. Specifically, it is envisioned that the computer program may be advantageously enabled to respond to pressing any of the keys 102 through 112 by initiating execution of a specific application computer program that has been associated with a specific key 102 through 112 by a user of the electronic device 20 prior to the key pressing event.

The register included in the register block 142 which stores the data that indicates which of the keys 102 through 112 has been pressed stores such data for only one of the keys 102 through 112. Subsequent pressings of any of the keys 102 through 112 after one key 102 through 112 has been pressed are ignored until the computer program executed by the digital computer 22, accessing the register block 142 via the SMBus 124, clears the register in the register block 142 which stores the key pressing data.

Although the present invention has been described in terms of the presently preferred embodiment, it is to be understood that such disclosure is purely illustrative and is not to be interpreted as limiting. For example, while the present invention discloses recording and subsequently entering user and supervisor passwords via the security keypad 86, technologies exist for recording and subsequently entering passwords in other ways such as biometric identification. Consequently, biometric identification techniques which utilize unique physical characteristics of individuals, for example finger print matching, palm print matching, handwriting matching, retinal scan matching, or voice matching, are all compatible with the present invention. Therefore, the present invention envisions a likelihood that the password input circuit 82 may be adapted to receive such biometric password data instead of a sequence of numbers entered through the security keypad 86. Analogously, the present invention also envsions the state machine 52 comparing biometric data received via the password input circuit 82 with biometric data previously obtained via the password input circuit 82 and recorded into the flash memory 56. Analogously, another type of digital logic circuit, such as a microprocessor or a programmable embedded controller, could be included in the pre-boot security controller 42 instead of the preferred state machine 52.

**Claims**

1. A pre-boot security controller (42) adapted for inclusion in an electronic device (20) that includes both a digital computer (22) and a power subsystem (24) for energising operation of the digital computer, the pre-boot security controller receiving electrical power even though the power subsystem is not energising operation of the digital computer and being adapted to be coupled to send power subsystem for enabling the power subsystem to energise operation of the digital computer upon receiving a prerecorded user password by the pre-boot security controller, the pre-boot security controller **characterised by** including:

    an integrated circuit including a non-volatile password memory (56) that stores at least one user password;
    a password input circuit (82) for receiving a password that is to be compared with any user passwords recorded in said password memory;
    a digital logic circuit (52) for comparing the password received by said password input circuit with any user passwords recorded in said password memory if the pre-boot security controller is in a security operating mode; and
    an output circuit (62) that is coupled to said digital logic circuit for transmitting an output signal to the power subsystem that enables the power subsystem to energise operation of the digital computer if the password received by said password input circuit matches a user password recorded in said password memory.

2. The pre-boot security controller of claim 1 wherein said password memory is electronically rewritable.

3. The pre-boot security controller of claim 1 wherein said password memory separately records at least one user password and at least one supervisor password.

4. The pre-boot security controller of claim 1 wherein said password input circuit is a keypad interface that is adapted to be coupled to a security keypad (86) for receiving the password that a user of the electronic device enters using the security keypad for comparison with user passwords recorded in said password memory.

5. The pre-boot security controller of claim 4 wherein, when in a password entry mode, the keypad interface may also receive from the security keypad user passwords that the digital logic circuit records in said password memory.

6. The pre-boot security controller of claim 4 wherein upon receiving a password by said password input circuit which matches a user password recorded in said password memory, the pre-boot security controller transitions from the security operating mode to an application operating mode in which the pre-boot security controller preserves data about pressings of the security keypad.

7. The pre-boot security controller of claim 1 wherein said digital logic circuit is a state machine.

8. The pre-boot security controller of claim 1 wherein said output circuit also provides an output signal which indicates existence of the security operating mode.

9. The pre-boot security controller of claim 1 further comprising a System Management Bus ("SMBus") (122) interface adapted to exchange signals with a SMBus included in the electronic device, said SMBus interface enabling the pre-boot security controller to receive user passwords for storage in said password memory.

10. An electronic device comprising:

a digital computer (22);
a power subsystem (24) for energizing operation of said digital computer; and **characterised by** further comprising a pre-boot security controller (42) according to claim 1.

11. The electronic device of claim 10 wherein said password memory included in said pre-boot security controller is electronically rewritable.

12. The electronic device of claim 10 wherein said password memory included in said pre-boot security controller separately records at least one user password and at least one supervisor password.

13. The electronic device of claim 10 wherein said password input circuit included in said pre-boot security controller is a keypad interface, the electronic device further comprising a security keypad (86) that is coupled to the keypad interface to transmit thereto for comparison with user passwords recorded in said password memory the password that a user of the electronic device enters using the security keypad.

14. The electronic device of claim 13 wherein the keypad interface of said pre-boot security controller, when said pre-boot security controller is in a password entry mode, may also receive from the security keypad user passwords that the digital logic circuit records in said password memory.

15. The electronic device of claim 13 wherein said pre-boot security controller, upon receiving a password by said password input circuit which matches a user password recorded in said password memory, transitions from the security operating mode to an application operating mode in which the pre-boot security controller preserves data about pressings of the security keypad.

16. The electronic device of claim 10 wherein said digital logic circuit included in said pre-boot security controller is a state machine.

17. The electronic device of claim 10 wherein said output circuit of said pre-boot security controller also provides an output signal which indicates existence of the security operating mode, the electronic device further comprising a status output subsystem which receives the output signal and presents a user of the electronic device with a perceptible indication that the security operating mode exists.

18. The electronic device of claim 10 wherein said pre-boot security controller further includes an SMBus interface (122), the electronic device further comprising an SMBus host that is coupled by an SMBus to the SMBus interface thereby enabling a computer program executed by said digital computer to record user passwords into said password memory via the SMBus.

**Patentansprüche**

1. Pre-Boot-Sicherheits-Controller (42), der zur Integration in eine elektronische Vorrichtung (20) eingerichtet ist, die sowohl einen digitalen Computer (22) als auch ein Energie-Teilsystem (24) zur Stromversorgung des Betriebes des digitalen Computers enthält, wobei der Pre-Boot-Sicherheits-Controller elektrische Energie auch dann empfängt, wenn das Energie-Teilsystem keine Stromversorgung des Betriebes des digitalen Computers durchführt, und er so eingerichtet ist, dass er mit dem Energie-Teilsystem gekoppelt ist, um das Energie-Teilsystem in die Lage zu versetzten, Stromversorgung des Betriebes des digitalen Computers beim Empfangen eines voraufgezeichneten Benutzer-Passworts durch den Pre-Boot-Sicherheits-Controller durchzuführen, wobei der Pre-Boot-Sicherheits-Controller **dadurch gekennzeichnet ist, dass** er enthält:

eine integrierte Schaltung, die einen nichtflüchtigen Passwort-Speicher (56) enthält, der wenigstens ein Benutzer-Passwort speichert;

eine Passwort-Eingabeschaltung (82), die ein Passwort empfängt, das mit etwaigen Benutzer-Passworten zu vergleichen ist, die in dem Passwort-Speicher aufgezeichnet sind;

eine digitale Logikschaltung (52), die das durch die Passwort-Eingabeschaltung empfangene Passwort mit etwaigen Benutzer-Passwörtern vergleicht, die in dem Passwort-Speicher aufgezeichnet sind, wenn der Pre-Boot-Sicherheits-Controller sich in einem Sicherheits-Betriebsmodus befindet; und

eine Ausgabeschaltung (62), die mit der digitalen Logikschaltung gekoppelt ist, um ein Ausgangssignal an das Energie-Teilsystem zu übertragen, das das Energie-Teilsystem in die Lage versetzt, Stromversorgung des Betriebs des digitalen Computers durchzuführen, wenn das durch die Passwort-Eingabeschaltung empfangene Passwort mit einem in dem Passwort-Speicher aufgezeichneten Benutzer-Passwort übereinstimmt.

**2.** Pre-Boot-Sicherheits-Controller nach Anspruch 1, wobei der Passwort-Speicher elektronisch überschrieben werden kann.

**3.** Pre-Boot-Sicherheits-Controller nach Anspruch 1, wobei der Passwort-Speicher separat wenigstens ein Benutzer-Passwort und wenigstens ein Überwachungs-Passwort aufzeichnet.

**4.** Pre-Boot-Sicherheits-Controller nach Anspruch 1, wobei die Passwort-Eingabeschaltung eine Tastenfeld-Schnittstelle ist, die so eingerichtet ist, dass sie mit einem Sicherheits-Tastenfeld (86) gekoppelt ist, um das Passwort zu empfangen, das ein Benutzer der elektronischen Vorrichtung unter Verwendung des Sicherheits-Tastenfeldes eingibt, und es mit in dem Passwort-Speicher aufgezeichneten Benutzer-Passworten zu vergleichen.

**5.** Pre-Boot-Sicherheits-Controller nach Anspruch 4, wobei in einem Passwort-Eingabemodus die Tastenfeld-Schnittstelle auch von dem Sicherheits-Tastenfeld Benutzer-Passwörter empfangen kann, die die digitale Logikschaltung in dem Passwort-Speicher aufzeichnet.

**6.** Pre-Boot-Sicherheits-Controller nach Anspruch 4, wobei der Pre-Boot-Sicherheits-Controller beim Empfangen eines Passworts durch die Passwort-Eingabeschaltung, das mit einem in dem Passwort-Speicher aufgezeichneten Benutzer-Passwort übereinstimmt, von dem Sicherheits-Betriebsmodus in einen Anwendungs-Betriebsmodus übergeht, in dem der Pre-Boot-Sicherheits-Controller Daten über Drückvorgänge des Sicherheits-Tastenfeldes erhält.

**7.** Pre-Boot-Sicherheits-Controller nach Anspruch 1, wobei die digitale Logikschaltung ein Zustandsautomat ist.

**8.** Pre-Boot-Sicherheits-Controller nach Anspruch 1, wobei die Ausgangsschaltung des Weiteren ein Ausgangssignal erzeugt, das das Vorhandensein des Sicherheits-Betriebsmodus anzeigt.

**9.** Pre-Boot-Sicherheits-Controller nach Anspruch 1, der des Weiteren eine System-Management-Bus-Schnittstelle (122) umfasst, die so eingerichtet ist, dass sie Signale mit einem System-Management-Bus austauscht, der in der elektronischen Vorrichtung enthalten ist, wobei die System-Management-Bus-Schnittstelle den Pre-Boot-Sicherheits-Controller in die Lage versetzt, Benutzer-Passwörter zur Speicherung in dem Passwort-Speicher zu empfangen.

**10.** Elektronische Vorrichtung, die umfasst:

einen digitalen Computer (22);

ein Energie-Teilsystem (24) zur Stromversorgung des Betriebes des digitalen Computers; und **dadurch gekennzeichnet, dass** sie des Weiteren einen Pre-Boot-Sicherheits-Controller (42) nach Anspruch 1 umfasst.

**11.** Elektronische Vorrichtung nach Anspruch 10, wobei der in dem Pre-Boot-Sicherheits-Controller enthaltene Passwort-Speicher elektronisch überschrieben werden kann.

**12.** Elektronische Vorrichtung nach Anspruch 10, wobei der Passwort-Speicher, der in dem Pre-Boot-Sicherheits-Controller enthalten ist, separat wenigstens ein Benutzer-Passwort und wenigstens ein Überwachungs-Passwort aufzeichnet.

**13.** Elektronische Vorrichtung nach Anspruch 10, wobei die Passwort-Eingabeschaltung, die in dem Pre-Boot-Sicherheits-Controller enthalten ist, eine Tastenfeld-Schnittstelle ist, und die elektronische Vorrichtung des Weiteren ein Sicherheits-Tastenfeld (86) umfasst, das mit der Tastenfeld-Schnittstelle gekoppelt ist, um das Passwort, das ein Benutzer der elektronischen Vorrichtung unter Verwendung des Sicherheits-Tastenfelds eingibt, zum Vergleich mit in dem Passwort-Speicher aufgezeichneten Benutzer-Passwörtem zu diesem zu übertragen.

**14.** Elektronische Vorrichtung nach Anspruch 13, wobei die Tastenfeld-Schnittstelle des Pre-Boot-Sicherheits-Controllers, wenn sich der Pre-Boot-Sicherheits-Controller in einem Passwort-Eingabemodus befindet, auch von dem Sicherheits-Tastenfeld Benutzer-Passwörter empfangen kann, die die digitale Logikschaltung in dem Passwort-Speicher aufzeichnet.

**15.** Elektronische Vorrichtung nach Anspruch 13, wobei der Pre-Boot-Sicherheits-Controller beim Empfangen eines Passworts durch die Passwort-Eingabeschaltung, das mit einem in dem Passwort-Speicher aufgezeichneten Benutzer-Passwort übereinstimmt, von dem Sicherheits-Betriebsmodus in einen Anwendungs-Betriebsmodus übergeht, in dem der Pre-Boot-Sicherheits-Controller Daten über Druckvorgänge des Sicherheits-Tastenfeldes erhält.

**16.** Elektronische Vorrichtung nach Anspruch 10, wobei die digitale Logikschaltung, die in dem Pre-Boot-Sicherheits-Controller enthalten ist, ein Zustandsautomat ist.

**17.** Elektronische Vorrichtung nach Anspruch 10, wobei die Ausgangsschaltung des Pre-Boot-Sicherheits-Controllers des Weiteren ein Ausgangssignal erzeugt, das das Vorhandensein des Sicherheits-Betriebsmodus anzeigt, und die elektronische Vorrichtung des Weiteren ein Statusausgabe-Teilsystem umfasst, das das Ausgangssignal empfängt und einem Benutzer der elektronischen Vorrichtung eine wahrnehmbare Anzeige gibt, dass der Sicherheits-Betriebsmodus vorhanden ist.

18. Elektronische Vorrichtung nach Anspruch 10, wobei der Pre-Boot-Sicherheits-Controller des Weiteren eine System-Management-Bus-Schnittstelle (122) enthält und die elektronische Vorrichtung des Weiteren einen System-Management-Bus-Host umfasst, der durch einen System-Management-Bus mit der System-Management-Bus-Schnittstelle gekoppelt ist, um so ein von dem digitalen Computer ausgeführtes Computerprogramm in die Lage zu versetzten, Benutzer-Passwörter über den System-Management-Bus in dem Passwort-Speicher aufzuzeichnen.

## Revendications

1. Unité de commande de sécurité à pré-initialisation (42) adaptée pour une inclusion dans un dispositif électronique (20) qui comprend un ordinateur numérique (22) et un sous-système d'alimentation (24) pour alimenter le fonctionnement de l'ordinateur numérique, l'unité de commande de sécurité à pré-initialisation recevant un courant électrique même si le sous-système d'alimentation n'alimente pas le fonctionnement de l'ordinateur numérique et étant adaptée pour être couplée audit sous-système d'alimentation pour permettre au sous-système d'alimentation d'alimenter le fonctionnement de l'ordinateur numérique lors de la réception d'un mot de passe utilisateur pré-enregistré par l'unité de commande de sécurité à pré-initialisation, l'unité de commande de sécurité à pré-initialisation étant **caractérisée en ce qu'**elle comprend :

   un circuit intégré comprenant une mémoire à mot de passe non-volatile (56) qui stocke au moins un mot de passe utilisateur ;
   un circuit d'entrée de mot de passe (82) pour recevoir un mot de passe qui doit être comparé avec tous les mots de passe utilisateur enregistrés dans ladite mémoire à mot de passe ;
   un circuit logique numérique (52) pour comparer le mot de passe reçu par ledit circuit d'entrée de mot de passe avec tous les mots de passe utilisateur enregistrés dans ladite mémoire à mot de passe si l'unité de commande de sécurité à pré-initialisation est dans un mode de fonctionnement en sécurité ; et

   un circuit de sortie (62) qui est couplé audit circuit logique numérique pour transmettre un signal de sortie au sous-système d'alimentation qui permet au sous-système d'alimentation d'alimenter le fonctionnement de l'ordinateur numérique si le mot de passe reçu par ledit circuit d'entrée de mot de passe correspond à un mot de passe utilisateur enregistré dans ladite mémoire à mot de passe.

2. Unité de commande de sécurité à pré-initialisation selon la revendication 1, dans laquelle ladite mémoire à mot de passe est électroniquement réinscriptible.

3. Unité de commande de sécurité à pré-initialisation selon la revendication 1, dans laquelle ladite mémoire à mot de passe enregistre séparément au moins un mot de passe utilisateur et au moins un mot de passe superviseur.

4. Unité de commande de sécurité à pré-initialisation selon la revendication 1, dans laquelle ledit circuit d'entrée de mot de passe est une interface clavier qui est adaptée pour être couplée à un clavier de sécurité (86) pour recevoir le mot de passe qu'un utilisateur du dispositif électronique entre à l'aide du clavier de sécurité pour une comparaison avec les mots de passe utilisateur enregistrés dans ladite mémoire à mot de passe.

5. Unité de commande de sécurité à pré-initialisation selon la revendication 4, dans laquelle, en mode d'entrée de mot de passe, l'interface clavier peut également recevoir à partir du clavier de sécurité des mots de passe utilisateur que le circuit logique numérique enregistre dans ladite mémoire à mot de passe.

6. Unité de commande de sécurité à pré-initialisation selon la revendication 4, dans laquelle, lors de la réception d'un mot de passe par ledit circuit d'entrée de mot de passe qui correspond à un mot de passe utilisateur enregistré dans ladite mémoire à mot de passe, l'unité de commande de sécurité à pré-initialisation passe du mode de fonctionnement en sécurité à un mode de fonctionnement en application dans lequel l'unité de commande de sécurité à pré-initialisation conserve les données relatives aux appuis-touche effectués à partir du clavier de sécurité.

7. Unité de commande de sécurité à pré-initialisation selon la revendication 1, dans laquelle ledit circuit logique numérique est une machine à états.

8. Unité de commande de sécurité à pré-initialisation selon la revendication 1, dans laquelle ledit circuit de sortie fournit également un signal de sortie qui indique l'existence du mode de fonctionnement en sécurité.

9. Unité de commande de sécurité à pré-initialisation selon la revendication 1, comprenant en outre une interface de Bus de gestion de système (« SMBus ») (122) adaptée pour échanger des signaux avec un SMBus compris dans le dispositif électronique, ladite interface SMBus permettant à l'unité de commande de sécurité à pré-initialisation de recevoir des mots de passe utilisateur pour un stockage dans ladite mémoire à mot de passe.

10. Dispositif électronique comprenant :

   un ordinateur numérique (22) ;
   un sous-système d'alimentation (24) pour alimenter le fonctionnement dudit ordinateur numérique ; et **caractérisé en ce qu'**il comprend en outre une unité de commande de sécurité à pré-initialisation (42) selon la revendication 1.

11. Dispositif électronique selon la revendication 10, dans lequel ladite mémoire à mot de passe comprise dans ladite unité de commande de sécurité à pré-initialisation est électroniquement réinscriptible.

12. Dispositif électronique selon la revendication 10, dans lequel ladite mémoire à mot de passe comprise dans ladite unité de commande de sécurité à pré-initialisation enregistre séparément au moins un mot de passe utilisateur et au moins un mot de passe superviseur.

13. Dispositif électronique selon la revendication 10, dans lequel ledit circuit d'entrée de mot de passe compris dans ladite unité de commande de sécurité à pré-initialisation est une interface clavier, le dispositif électronique comprenant en outre un clavier de sécurité (86) qui est couplé à l'interface clavier afin de lui transmettre, pour une comparaison avec les mots de passe utilisateur enregistrés dans ladite mémoire à mot de passe, le mot de passe qu'un utilisateur du dispositif électronique entre à l'aide du clavier de sécurité.

14. Dispositif électronique selon la revendication 13, dans lequel l'interface clavier de ladite unité de commande de sécurité à pré-initialisation, lorsque ladite unité de commande de sécurité à pré-initialisation est dans un mode d'entrée de mot de passe, peut également recevoir, à partir du clavier de sécurité, des mots de passe utilisateur que le circuit logique numérique enregistre dans ladite mémoire à mot de passe.

15. Dispositif électronique selon la revendication 13, dans lequel ladite unité de commande de sécurité à pré-initialisation, lors de la réception d'un mot de passe par ledit circuit d'entrée de mot de passe qui correspond à un mot de passe utilisateur enregistré dans ladite mémoire à mot de passe, passe du mode de fonctionnement en sécurité à un mode de fonctionnement en application dans lequel l'unité de commande de sécurité à pré-initialisation conserve les données relatives aux appuis-touche effectués à partir du clavier de sécurité.

16. Dispositif électronique selon la revendication 10, dans lequel ledit circuit logique numérique compris dans ladite unité de commande de sécurité à pré-initialisation est une machine à états.

17. Dispositif électronique selon la revendication 10, dans lequel ledit circuit de sortie de ladite unité de commande de sécurité à pré-initialisation fournit également un signal de sortie qui indique l'existence du mode de fonctionnement en sécurité, le dispositif électronique comprenant en outre un sous-système de sortie d'état qui reçoit le signal de sortie et présente à un utilisateur du dispositif électronique une indication perceptible que le mode de fonctionnement en sécurité existe.

18. Dispositif électronique selon la revendication 10, dans lequel ladite unité de commande de sécurité à pré-initialisation comprend en outre une interface SMBus (122), le dispositif électronique comprenant en outre un hôte SMBus qui est couplé par un SMBus à l'interface SMBus, permettant ainsi à un programme d'ordinateur exécuté par ledit ordinateur numérique d'enregistrer les mots de passe utilisateur dans ladite mémoire à mot de passe via le SMBus.

FIG._1

FIG._2